# EUROPEAN PATENT APPLICATION

(11) **EP 1 506 917 A2**
(43) Date of publication of application: **16.02.2005**
(21) Application number: 04103633.6
(22) Date of filing: 28.07.2004
(51) Int. Cl.: B62K 5/04

(54) **Stabilization device for vehicle**

(30) Priority: 14.08.2003 IT TO20030639
(71) Applicant: Angiono, Carlo, 10133 Torino (IT); Martina, Marco, 10050 Giaglione (TO) (IT)
(72) Inventor: Angiono, Carlo, 10133 Torino (IT); Martina, Marco, 10050 Giaglione (TO) (IT)
(74) Representative: Robba, Pierpaolo

(57) **Abstract**

A suspension (stabilizing) device (30) for a vehicle (1), said vehicle being equipped with a frame (15), a pair of wheels (25s, 25d) with axes of rotation substantially aligned, and at least a third steering wheel (13), comprising: a pair of symmetrically disposed transverse control arms (31s, 31d) on which said first two vehicle wheels (25s, 25d) are pivotally mounted; a supporting member (23) to which said control arms (31s, 31d) are pivotally connected; means (37s, 37d) disposed between said arms and said frame (15), for damping the oscillations of said control arms (31s, 31d), characterized by the fact that said supporting member (23) comprises means (24) adapted to pivotally support said frame (15), whereby when said frame (15) oscillates because of a road turn said supporting member (23) oscillates independently of said frame (15).

## Description

The present invention refers to a suspension system for stabilizing vehicles.

More particularly the present invention refers to a suspension system for three-wheeled vehicles of the type comprising a steering front wheel and two rear wheels at least one of which is a driving wheel.

As it is known, three-wheeled vehicles provide a number of advantages in comparison with motor cars and motorcycles: with respect to the former a three-wheeled vehicle has an outline dimension notably reduced that allows to easily drive it in the city traffic and readily find a parking stall; with respect to the latter a three-wheeled vehicle is surely more stable and offers greater comfort and safety.

Nevertheless, actual three-wheeled vehicles are not particularly welcome to the public since they do not provide the same drive feelings of a two-wheeled vehicle such as a motorcycle.

Actual three-wheeled vehicles generally comprise a frame on the front portion of which a central steering wheel is fitted whereas a pair of rear wheels is fitted to the frame rear portion with at least one of such rear wheels being a driving wheel.

The rear wheels are generally mounted on control (rocking) arms or wishbones pivoted to the frame and provided with shock absorbers for compensating the arm oscillations.

Additionally the three-wheeled vehicles generally do not exhibit a sufficient stability under some driving conditions, particularly when the driver has to enter a turn.

As a matter of fact a three-wheeled vehicle cannot tilt sideways in a safe manner like a two-wheeled vehicle can do where the centrifugal force is countered by a corresponding inclination of the driver and therefore of the vehicle.

In view of this situation many known three-wheeled vehicles are equipped with suspension (stabilizing) devices to bring back the vehicle in a vertical position after a turn has been taken. Nevertheless, such devices do not depend upon the movement of the driver's body and their construction is quite complex and therefore very expensive.

It is an object of the present invention to provide a suspension system for a three-wheeled vehicle that is capable to oppose the side forces acting on the vehicle, in which said suspension device is controlled by the driver with simple and natural movements, similar to those necessary to drive a two-wheeled vehicle.

An additional object of the present invention is to provide a three-wheeled vehicle allowing the utmost possible adherence to the ground, even in presence of tilting features that foster its driving as it were a two-wheeled vehicle.

The above and other objects are achieved through a suspension device as claimed in the attached claims.

Advantageously, a three-wheeled vehicle equipped with a suspension device according to the present invention allows the driver to set the turn trajectory in a precise manner, thus allowing a complete control of the vehicle, with a technique similar to that used in a two-wheeled vehicle.

The invention will now be disclosed in details with particular reference to the attached drawings, only supplied for illustrating a non-limiting example, in which:
- Figure 1 is a side view of a three-wheeled vehicle that incorporates a suspension device according to the present invention;
- Figure 2 is a top view of the three-wheeled vehicle of Figure 1;
- Figures 3a to 3e are rear views of the suspension device at different drive attitudes.

Referring to the attached Figures an embodiment of a suspension device of the invention will now be disclosed, incorporated in a three-wheeled vehicle of the type provided with a frame having a tubular central beam.

For simplicity sake, in the drawings the known components that do not concern the invention have been omitted, such as for instance the engine and the kinematic chain driving at least one of the two rear wheels of the vehicle.

Moreover, although the invention is being disclosed with reference to a three-wheeled vehicle having a steering front wheel, it is nevertheless possible to incorporate a suspension device according to the invention into a three-wheeled vehicle having a rearward located steering wheel.

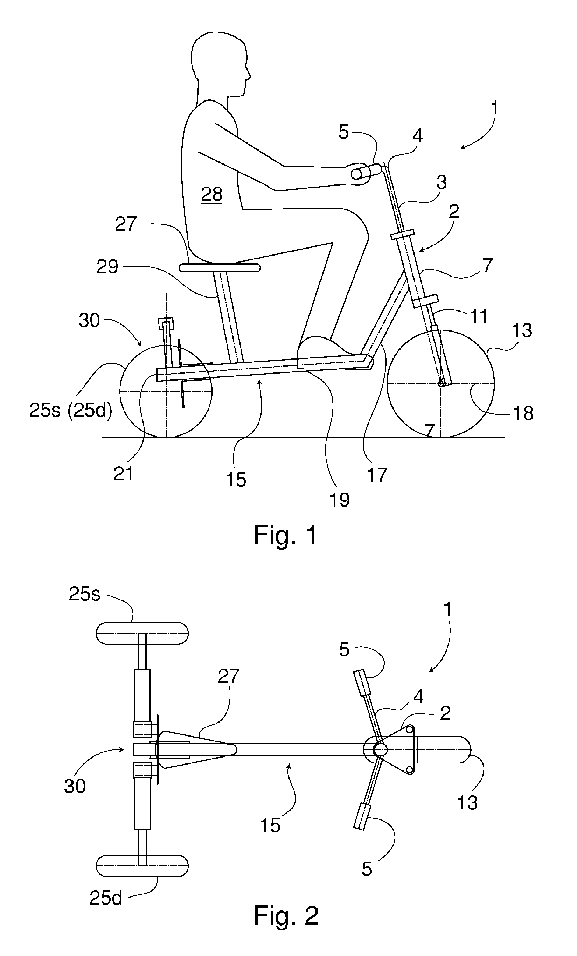

With reference in particular to Figures 1 and 2, a three-wheeled vehicle 1 includes a steering front wheel 13 actuated through a steering assembly 2 which is connected - through a frame having a tubular central beam 15 - to two substantially parallel rear wheels 25s, 25d, by means of a suspension device 30.

The steering assembly 2 includes a sleeve 7 in which a steering column 3 is housed that carries at its upper end a handlebar 4 provided with handgrips 5.

The lower end 3 of the steering column is secured to a fork 11 that supports the steering front wheel 13.

Preferably the diameter of the front wheel 13 is larger than that of the rear wheels 25s, 25d.

The frame 15 comprises an inclined front portion 17 connected to the centre of the sleeve 7 and a central portion 19 that is slightly tilted with respect to a longitudinal axis 18, said central portion 19 being prolonged with a tail portion 21.

In correspondence of the central portion 19 of the frame 15 a support 29 is provided to bear a saddle 27 for a driver 28.

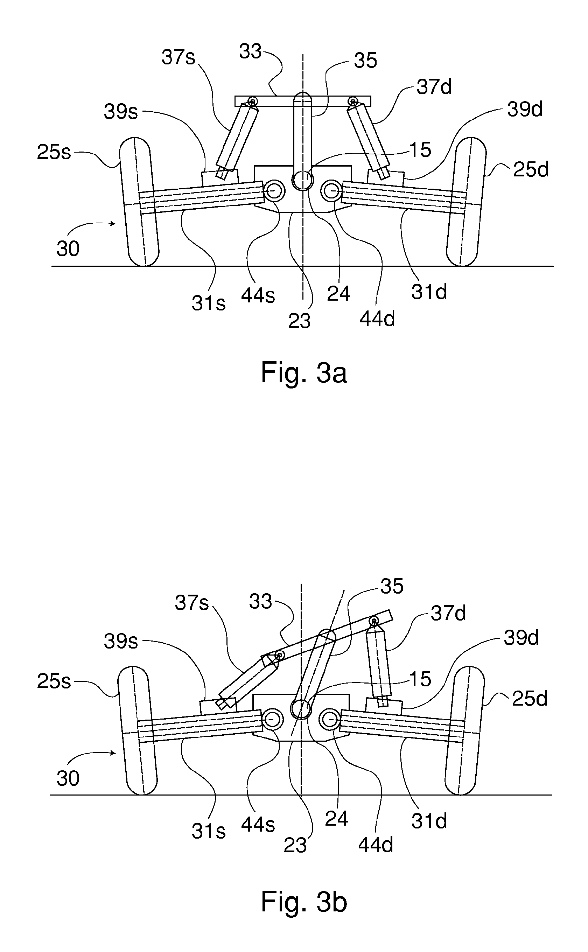

With reference to Figures 3a to 3e, the rear part of the three-wheeled vehicle 1 is now disclosed, which shows the details of the suspension device 30.

With reference to Figure 3a, the stabilizing device 30 is illustrated when the vehicle is unloaded and runs in a rectilinear direction.

The suspension device 30 comprises a central plate 23 that is transversely positioned with respect of the longitudinal axis of the vehicle, to which the (transverse) control arms 31s, 31d supporting the rear wheels 25s, 25d are secured through rotatable support members 44s, 44d.

Advantageously, according to the invention, such central plate 23 is mounted on the frame 15 through a sleeve 24 into which the portion 21 of said frame 15 is inserted; this way the frame 15 and the plate 23 are independently rotatable one to the other.

Still according to the invention the suspension device 30 comprises a lever 35 fastened to the tail portion 21 of the frame 15 that projects rearward of said plate 23.

Said lever 35 is pivotally connected to the centre of a crossbar 33 the ends of which are pivotally connected to the upper ends of respective shock absorbers 37s, 37d, whereas the lower ends of said shock absorbers 37s, 37d are pivotally connected to brackets 39s, 39d integral (i.e. firmly secured to) with the above mentioned arms 31s, 31d.

Because of the described arrangement, as will be better illustrated later on, a rotation of the frame 15 with respect to the plate 23, caused for instance by the vehicle advancing along a turn, can cause an oscillation and the simultaneous rotation of said crossbar 33, thus increasing the load acting on that of the arms 31s, 31d which is inside the turn trajectory with a consequent increase of the road holding properties.

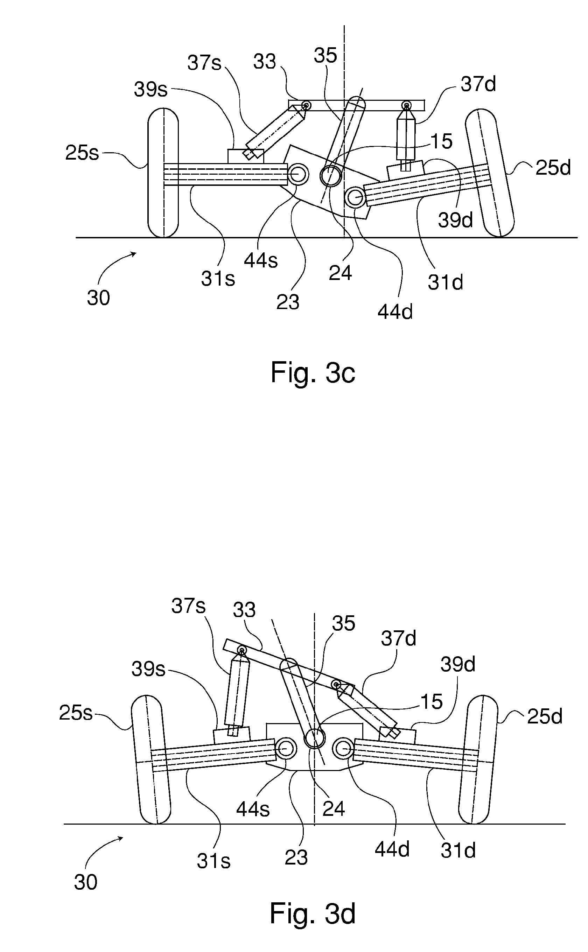

With reference to Figures 3b and 3c, there is illustrated the effect on the suspension device 30 of a rightward steering from the driver 28 of the vehicle 1, without load and fully loaded, respectively.

As can be seen by considering the disposition of the device 30 in Figure 3b, when the vehicle is not loaded, a rotation of the frame 15 caused by the bent posture assumed by the driver 28 during a right turn, substantially causes only a clockwise rotation of the lever 35 and the consequent rotation in the opposite direction of the crossbar 33 that simultaneously rotates toward right, i.e. toward the inside of the turn trajectory taken by the vehicle, because of the above mentioned rotation of the lever 35, with the plate 23 remaining substantially still in this situation. This way the control arm 31 d that is located inside the turn is subjected to a load increase, while the opposite arm 31 s is relieved.

Referring now to Figure 3c, under full load condition of the vehicle and with an equal rotation angle of the lever 35 induced by the bent posture of the driver during the turn, even the plate 23 undergoes a clockwise rotation thus bringing the inner end of the arm 31d towards the ground and increasing thereby the load onto said arm 31d. As a consequence, even the axis of rotation of the right wheel 40d undergoes a displacement causing an inclination of the plane of rotation of the wheel 40d located inside of the turn, whereas the inclination of the plane of rotation of the outer wheel 40s remains substantially constant.

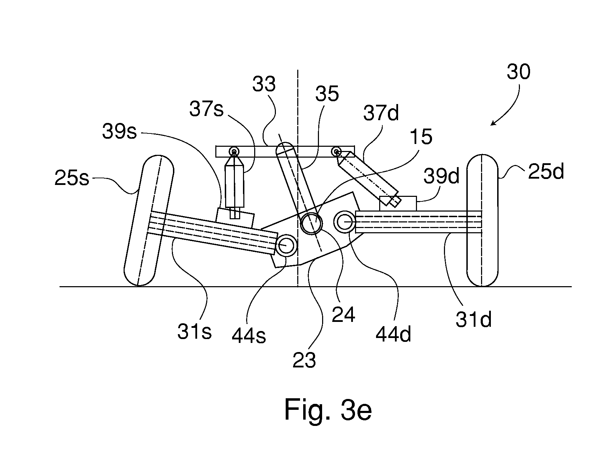

With reference to Figures 3d and 3e, there is illustrated the effect caused on the suspension device 30 by a left steering accomplished by the driver 28 of the vehicle 1, in the situations of absence of load and full load of the vehicle, respectively. The operation of the device is the same as that disclosed above with reference to a right steering and illustrated in the Figures 3b and 3c, since the vehicle 1 is symmetrical with respect to the frame 15.

It is evident that the above disclosure has been supplied as a non limiting example, and that modifications and changes are possible within the scope of the invention.

## Claims

1. A suspension device (30) for a vehicle (1), said vehicle being equipped with a frame (15), a pair of wheels (25s, 25d) with axes of rotation substantially aligned and at least a third steering wheel (13), comprising:
- a pair of symmetrically disposed transverse control arms (31s, 31d) on which said first two vehicle wheels (25s, 25d) are pivotally mounted;
- a supporting member (23) to which said control arms (31s, 31d) are pivotally connected;
- means (37s, 37d) disposed between said arms and said frame (15), for damping the oscillations of said control arms (31s, 31d),
**characterized by** the fact that said support member (23) comprises means (24) adapted to pivotally support said frame (15), whereby when said frame (15) oscillates because of a road turn said supporting member (23) oscillates independently of said frame (15).

2. A device as claimed in claim 1, wherein said supporting member (23) comprises a sleeve (24) in which a tubular tail portion (21) of said frame (15) is rotatably lodged.

3. A device as claimed in claim 2, wherein said supporting member (23) comprises a plate (23) substantially arranged at a transverse position with respect to the vehicle frame (15).

4. A device as claimed in claim 2 or 3, wherein between said damping means (37s, 37d) and said frame (15) there is interposed a linkage comprising a horizontal crossbar (33) at the ends of which said damping means (37s, 37d) are pivotally connected, whereas a lever (35) secured to said tail portion (21) of the frame (15) is pivotally connected to the intermediate portion of said horizontal crossbar (33).

5. A device as claimed in claim 4, wherein said symmetrical control arms (31 s, 31d) are pivotally connected to said supporting member (23) through rotatable support members (44s, 44d) symmetrically disposed with respect to said tail portion of the frame (15).

6. A device as claimed in claim 1, wherein said means (37s, 37d) for damping the oscillations comprises a pair of shock absorbers.

7. A device as claimed in claim 6, wherein the lower ends of said shock absorbers are pivotally connected to respective brackets (39s, 39d) integral with said arms (31s, 31d).

8. A device as claimed in any of the preceding claims, wherein the axis of rotation of said wheels (25s, 25d) of said pair of wheels is rearward located with respect to said supporting member (23).

9. A vehicle comprising a frame, a pair of wheels with axes of rotation substantially aligned and at least a third steering wheel, said vehicle being equipped with a suspension device (30) as claimed in anyone of claims 1 to 8.

10. A vehicle as claimed in claim 9, wherein said first two wheels are the rear wheels (25s, 25d) at least one of said wheels being a driving wheel, and wherein said third steering wheel is the front wheel (13) located at a plane substantially disposed at the centre of the plane on which said two rear wheels (25s, 25d) rotate.

11. A vehicle as claimed in claim 10, wherein the diameter of said front wheel (13) is larger than the diameter of said rear wheels (25s, 25d).
